# EUROPÄISCHE PATENTSCHRIFT

(11) **EP 4 077 925 B1**
(45) Veröffentlichungstag und Bekanntmachung des Hinweises auf die Patenterteilung: **14.05.2025**
(21) Anmeldenummer: 20817221.3
(22) Anmeldetag: 30.11.2020
(51) Int. Cl.: F03D 13/20, F03D 15/00, F03D 17/00

(54) **ANTRIEBSSYSTEM FÜR BINNENWINDANLAGEN GROSSER HÖHEN UND LEISTUNGEN**
DRIVE SYSTEM FOR INTERIOR WIND TURBINES OF GREAT HEIGHTS AND PERFORMANCE
SYSTÈME D'ENTRAÎNEMENT POUR ÉOLIENNES INTÉRIEURES DE GRANDES HAUTEURS ET DE GRANDES PERFORMANCES

(30) Priorität: 19.12.2019 DE 102019008854
(43) Veröffentlichungstag der Anmeldung: 26.10.2022
(73) Patentinhaber: beventum GmbH, 04109 Leipzig (DE)
(72) Erfinder: BENDIX, Horst, 04205 Leipzig (DE)
(74) Vertreter: Adares PartGmbB
(86) Internationale Anmeldenummer: PCT/EP2020/025547
(87) Internationale Veröffentlichungsnummer: WO 2021/121650

(56) Entgegenhaltungen:
- WO-A1-2016/177883
- WO-A1-2017/215797
- DE-A1- 102016 206 888
- US-A1- 2011 018 269

## Beschreibung

Die Erfindung betrifft eine den Höhenwind nutzende Binnenwindanlage mit drehbarem Turm und Fortleitung des Rotordrehmomentes aus der Nabenhöhe zur im unteren Bereich des Turmes angeordneten Antriebs- / Generatorplattform.

Aus der Fachliteratur sind Windenergieanlagen mit feststehenden Türmen bekannt, die für alle Windrichtungen ausgelegt sind. Sie weisen gegenwärtig Nabenhöhen bis zu 160 m auf. Noch größere Höhen führen zu Abmessungen und Gewichten, die zum Errichten dieser Anlagen Hebezeuge erfordern, die nur bedingt zur Verfügung stehen. Die Vergrößerung aller Baugruppen einer solchen Windenergieanlage führt wegen der zunehmenden großen Höhen und Massen/Gewichte zu hohen Kosten beim Errichten durch solche Hebezeuge.

Eine andere Möglichkeit besteht darin, den Generator am Fuß der Windenergieanlage unterzubringen. Diese Lösung ist aus der Druckschrift nach EP 2 434 153 A1 bekannt. Bei dem darin offenbarten Turm ist der Generator am Fuß angeordnet. Die Übertragung der Windkraft erfolgt von oben über die Rotorwelle nach unten zum Generator durch einen Triebstrang, der aus mehreren, im Kraftfluss nacheinander angeordneten Einzeltrieben aus jeweils zwei Riemenscheiben und einem Treibriemen zusammengesetzt ist. Der Fuß des Turms ist gegenüber dem Fundament auf einem Drehwerk gelagert, wodurch die gesamte Windenergieanlage mit dem Rotor in den Wind nachgeführt werden kann.

Ferner ist aus der US 2011/018269 A1 ein Antriebssystem für Binnenwindanlagen bekannt, aufweisend einem drehbaren Turm mit in Nabenhöhe gelagertem Rotor und einer am Fuße des Turmes angeordneten Antriebs- und Generatorplattform mit einem Motor, wobei zur Fortleitung des Rotordrehmomentes ein Gurt vorgesehen ist. Der Gurt ist zwischen einem unteren Rotationsübertragungselement und einem oberen Rotationsübertragungselement angeordnet und weist Drahtseile zwischen Gummischichten auf. Die Drahtseile sind mit ihren jeweiligen Endabschnitten über eine gewisse Länge parallel zueinander gelegt.

Weiterhin ist aus der Druckschrift DE 10 2008 024 829 B4 eine Windenergieanlage bekannt, bei der dem Generator zur Erhöhung des Wirkungsgrades eine Schwungmasse zum Speichern überschüssiger Energie, eine Kupplungseinrichtung und ein zusätzlicher Motor zum Antreiben des

Generators im Bedarfsfall zugeordnet wird. Diese Baugruppen können auf Grund ihres hohen Gesamtgewichts nicht mehr ohne zusätzlichen Aufwand oben in der Gondel untergebracht werden. Alle der Rotorachse nachfolgenden Baugruppen werden deshalb am Fuß der Windenergieanlage auf einer Bodenplatte befestigt. Zwischen der oben angeordneten Rotorachse und der unten angeordneten Antriebswelle ist eine durchgehende Kraftübertragungseinrichtung vorgesehen. Sie kann für die zu übertragenden Kräfte im Bereich von bisher üblichen Nabenhöhen und Leistungen als Zugmitteltrieb (Seiltrieb, Riementrieb oder Kettentrieb) ausgebildet sein.

Weitere Windenergieanlagen mit drehbaren Türmen sind unter anderem aus den Druckschriften nach DE 10 2012 009 145 A1, DE 20 2017 003 631 U1 und DE 20 2016 001 490 U1 bekannt. Solche Anlagen sind durch höhere Türme gekennzeichnet, die gemeinsam mit dem Rotor in den Wind gedreht werden.

Aufgabe der Erfindung ist es, große Binnenwindanlagen mit drehbarem Turm mit einem zwischen dem Rotor und dem Generator angeordneten Antriebssystem für Leistungen > 5 MW so auszurüsten, das den Bedingungen des Windes in den unteren troposphärischen Schichten (zwischen 100 und 400 m über Standort) gerecht wird und die Anforderungen an die Sicherheit, die Zuverlässigkeit und den Wirkungsgrad erfüllt. Insbesondere soll die durch die größere Entfernung des Antriebes vom Abtrieb erforderliche Sicherheit zur extremen Drehmomentübertragung gegen Schäden im Flachriementrieb durch elektronische Überwachung und durch geeignete Werkstoffe gerecht werden. Solche hohen Binnenwindanlagen sind nach den Druckschriften DE 20 2017 003 631 U1 und DE 10 2016 014 799 B4 in ihrem prinzipiellen Aufbau bekannt, ohne dass die Kraftübertragung vom oben angeordneten Rotor über eine relativ große Entfernung von nahezu 200 m und mehr mittels eines Triebstrangs nach unten auf den Generator im Einzelnen offenbart wird.

Diese Aufgabe wird dadurch gelöst, dass ein Flachriemen verwendet wird, der in seinem Inneren durch parallel verlaufende hochfeste Stahldrahtseile verstärkt ist. Diese Stahldrahtseile werden an Ihren Enden miteinander verknüpft / verbunden. Das biegsame Trägermaterial wird durch Deckvulkanisation unter Einsatz ortsveränderlicher Vorrichtungen an beliebigem Ort des Flachriemens ausgeführt.

Damit mittels des Antriebssystems die Kräfte von der Rotorwelle sicher auf die Generatorwelle übertragen werden, sind wie bei jedem Riementrieb neben der Zugfestigkeit des Treibriemens die für die unterschiedlichen Betriebsbedingungen erforderlichen Umschlingungswinkel, Reibwerte und Gurtspannkräfte einzuhalten. Durch den für den Riementrieb großen Abstand zwischen der oberen und der unteren Riemenscheibe muss über die gesamte Länge eine sichere Gurtführung gewährleistet werden. Dafür sind in bestimmten Abständen wartungsarme Führungsrollen vorgesehen.

Der Flachriemen wird über die gesamte Länge zwischen beiden Riemenscheiben zur Sicherung der Zuverlässigkeit der Übertragung des Drehmomentes zwischen dem Flachriemen und den Riemenscheiben sowohl der Flachriemen als auch die Oberflächen der Riemenscheiben zur Gewährleistung des Reibwertes µ durch Verfahrensvorgänge mit Langzeitwirkung behandelt.

Ein Reißen des Flachriemens während des Betriebes hätte längere Ausfallzeiten zur Folge. Deshalb ist eine automatische Überwachungseinrichtung vorgesehen, die die Unversehrtheit des Flachriemens ständig überwacht und bereits erste Beschädigungen der Litzen eines Drahtseiles im Flachriemen erkennt und ein Stillsetzen des Antriebssystems bewirkt.

Für das gesamte Antriebssystem wird ein hoher Wirkungsgrad angestrebt. Dies wird durch die Verwendung des Flachriemens und wartungsarmer Baugruppen erreicht. Zu einem hohen Wirkungsgrad des Antriebssystems trägt auch bei, dass die Vorspannung des Flachriementriebes stets so eingestellt bleibt, wie sie für einen sicheren Betrieb erforderlich ist. Dazu wird eine automatische Mess-, Steuer- und Regeleinrichtung vorgesehen, die die Vorspannung zuverlässig an die jeweiligen Windverhältnisse anpasst und einstellt. Diese Einrichtung steht mit einer Antriebs- und Generatorplattform in funktioneller Verbindung, die aus einer gelenkig gelagerten Plattform besteht, auf der der Generator angeordnet ist. Unter der Plattform befindet sich ein Spanngewicht, das mittels eines Spindeltriebs gegenüber der Längsachse des Gelenks verschoben werden kann und so eine Veränderung der Spannkraft des Riemens bewirkt. Beim Einsatz von zwei oder mehr Generatoren wird diese Vorspanneinrichtung für jeden vorgesehen.

Weitere Einzelheiten und Vorteile des Erfindungsgegenstandes ergeben sich aus der nachfolgenden Beschreibung und den zugehörigen Zeichnungen, in denen ein bevorzugtes Ausführungsbeispiel für zwei konstruktiv unterschiedlich ausgebildete, den Höhenwind nutzende Binnenwindenergieanlagen dargestellt ist.

Es zeigen:
**Fig. 1** eine Binnenwindanlage, die zur Nutzung des Windes in troposphärischen Schichten geeignet ist, in der Ausführung mit drehbarem Turm und gespreiztem Turmquerschnitt,
**Fig. 2** eine Binnenwindanlage, die zur Nutzung des Windes in troposphärischen Schichten geeignet ist, in der Ausführung mit drehbarem Turm als Vertikalsäule und mindestens zwei gegenhaltenden Drucksäulen,
**Fig. 3** den oberen Bereich des Antriebssystems für eine Binnenwindanlage nach den Fig. 1 oder 2 und
**Fig. 4** den unteren Bereich des Antriebssystems für eine Binnenwindanlage nach den Fig. 1 oder 2.

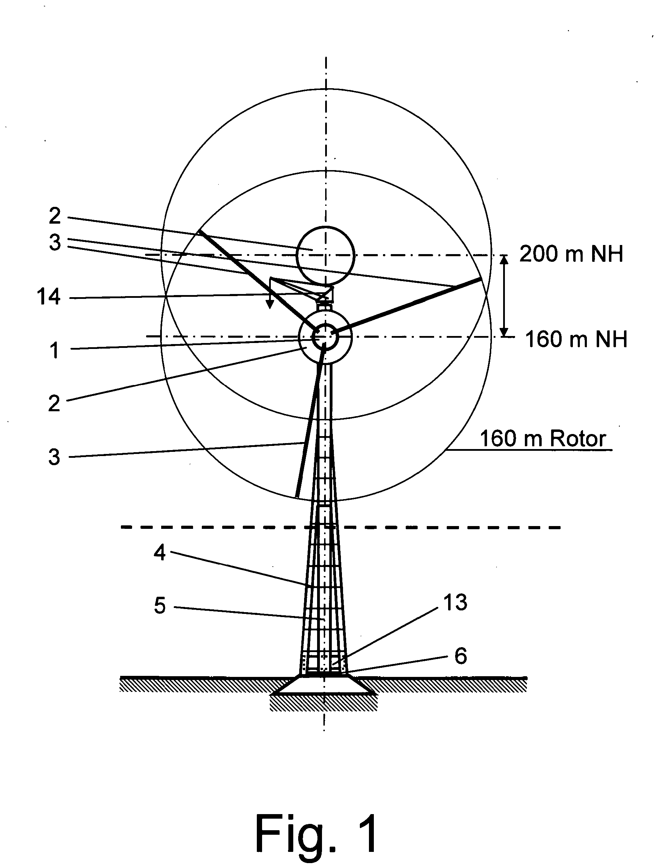

Die Binnenwindanlage nach **Fig. 1** ist für die Nutzung des Höhenwindes ausgelegt. Sie besteht prinzipiell aus einem drehbaren Turm 5 mit gespreiztem Turmquerschnitt 4, dem Rotor 3 mit der Rotornabe und der Rotorwelle 1 sowie der Antriebs- und Generatorplattform 13. Eine so ausgebildete Windenergieanlage ist nach der Druckschrift DE 20 2017 003 631 U1 bekannt. Die Verwendung fertiggewalzter Großrohre (bis 3m Durchmesser) für den Turm 5 mit zwei- oder mehrfacher Anordnung in Richtung der Turmhauptachse und mit zunehmender Spreizung in Richtung größerer Beanspruchung nach unten mit der Aufstellung auf einer aus dem Großbaggerbau bekannten und bewährten Drehverbindung 6 gestattet insgesamt bei weiterer vergrößerter Nabenhöhe (NH) in dem Bereich 160 m (untere Strichlinie) bis 200 m (obere Strichlinie) günstigere Eigenmasse und niedrigere Kosten trotz höherem Energieertrag gegenüber bisheriger Bauweise des Turmes 5 mit biegebelastetem Querschnitt.

Die Binnenwindanlage mit drehbarem Turm 5 und gespreiztem Turmquerschnitt 4 ermöglicht durch die Turmhauptachse die Anwendung des neuen Antriebssystems zur Fortleitung des Rotordrehmomentes bis zur Antriebs- / Generatorplattform 13 im drehbaren Turmfuß. In der Zeichnung ist mit dem Bezugszeichen 15 die obere Grenze der Prandtl-Schicht eingezeichnet. Als Hilfsmittel für die Durchführung von vertikaler Rotorblattmontage, Revisions-und Reparaturarbeiten ist auf dem Turm 5 ein Eigenhebezeug 14 angeordnet.

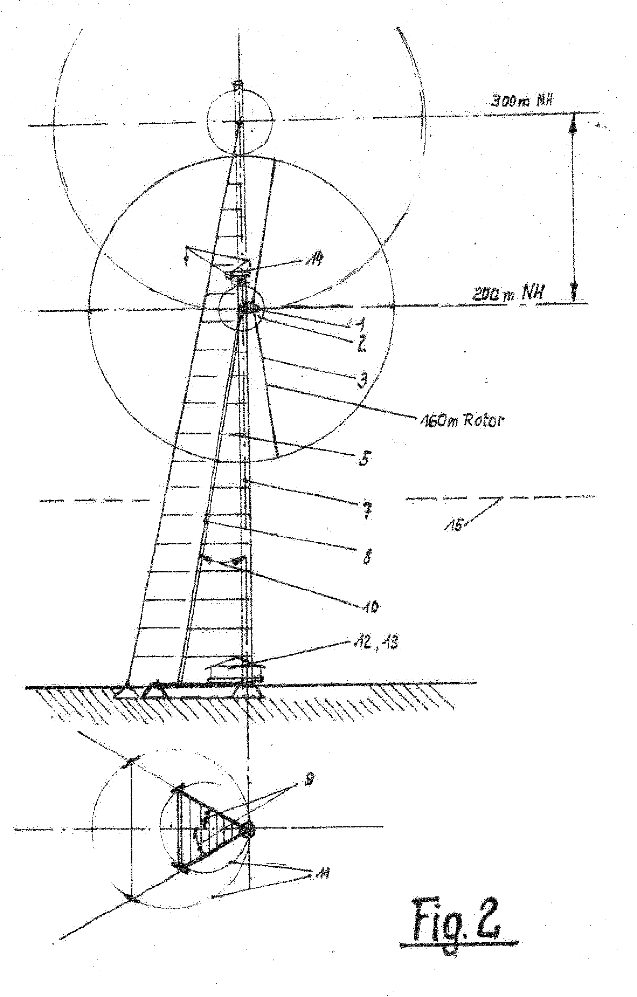

Eine nach **Fig. 2** dargestellte Binnenwindanlage ist aus der Druckschrift nach DE 10 2016 014 799 B4 als "TURNING-TOWER" bekannt. Das obere Bild zeigt die Anlage in einer Seitenansicht, die Draufsicht ist im unteren Bild wiedergegeben. Die Binnenwindanlage besteht aus einem drehbaren Turm 5 mit Vertikalsäule 7 und mit mindestens zwei gegenhaltenden horizontal und vertikal gespreizten Drucksäulen 8. Die fertiggewalzten Großrohre in Herstelllänge für die Säulen 7, 8 und fertig gewalzter oder gekanteter Profile werden zu Turmsektionen gefügt. Diese Profile werden nach neuen technologischen Verfahren - ohne den Einsatz von Großhebezeugen- Sektion auf Sektion vertikal aufeinander errichtet und gefügt oder als horizontal am Boden montierter Turm 5 -komplett ausgerüstet- aufgerichtet.

In der Zeichnung sind der horizontale Spreizwinkel 9 und der vertikale Spreizwinkel 10 dargestellt. Auf einer Tragkonstruktion am Fuß der Binnenwindanlage befindet sich das Maschinenhaus 12 sowie die Antriebs- / Generatorplattform 13. In der kleineren Ausführung der Turmkonstruktion beträgt die Nabenhöhe (NH) 200 m (untere Strich- Punktlinie), die Nabenhöhe (NH) der größeren Ausführung der Turmkonstruktion hingegen beträgt 300 m (obere Strich- Punktlinie). Damit werden die in diesem Bereich auftretenden höheren Windgeschwindigkeiten genutzt.

Den Drehkreis 11 für die Standsicherheit der Binnenwindanlage zeigt die Draufsicht nach **Fig. 2****.**

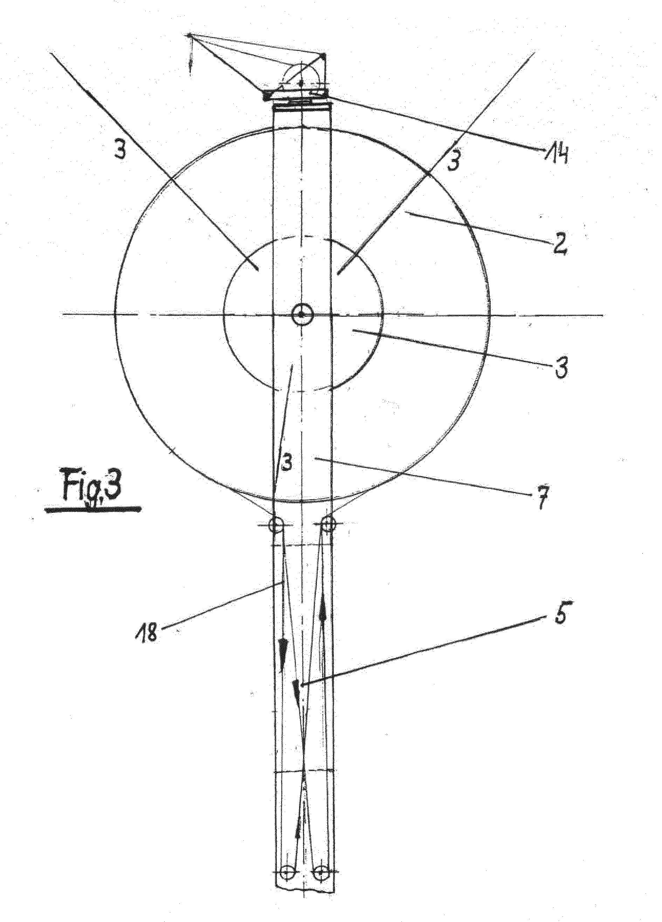

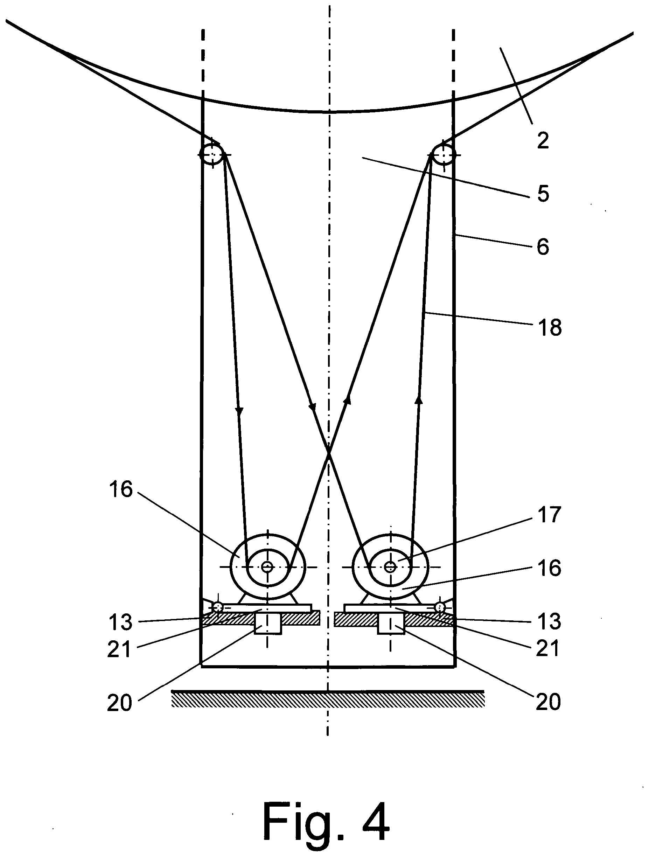

Das Antriebssystem zur Fortleitung des Rotordrehmomentes aus der Höhe der Rotornabe1 inclusive Übersetzung und/oder Triebstrangverzweigung zur drehzahlangepassten Wandlung des Drehmomentes zum Generator 16 in den drehbaren Türmen 5 der beiden Binnenwindanlagen ist in den Zeichnungen nach den **Fig. 3** (oberer Bereich) und **Fig. 4** (unterer Bereich) dargestellt. Das Kraftübertragungselement zwischen den beiden Riemenscheiben 2 und 17 ist ein Flachriemen 18. Er wird durch mehrere parallel zueinander angeordnete hochfeste Stahldrahtseile innen verstärkt, die zwischen der Laufschicht und der Deckschicht in der Zugschicht angeordnet werden. Mit diesem stahldrahtseilverstärkten, schlaufenbildenden Flachriemen 18 wird durch die unterschiedlichen Durchmesser der oberen und unteren Riemenscheibe 2 und 17 ein gewolltes Übersetzungsverhältnis integriert.

Die Zeichnungen nach den **Fig. 3** und **Fig. 4** zeigen den prinzipiellen Aufbau eines triebstrangverzweigten Antriebes im drehbaren Turm 5 mit einer Verzweigung auf zwei Generatoren 16. Zwei Flachriemen 18 werden von der oberen großen Riemenscheibe 2 über stets parallel montierte Führungswalzen durch den Turm 5 nach unten zu zwei Riemenscheiben 17 geführt. Jeder der beiden zugehörigen Generatoren 16 ist auf der Antriebs- / Generatorplattform 13 und erzeugt durch seine Eigenmasse den Hauptanteil der Gurtvorspannung. Zusätzlich besitzt die Schwinge 21 mit dem Vorspanngewicht 20 die Möglichkeit, die Vorspannung windgeschwindigkeitsabhängig zu regulieren. In **Fig. 4** ist eine Triebstrangverzweigung mit zwei Generatoren 16 dargestellt. Eine solche Ausführung ist jedoch nicht zwingend erforderlich. Die Kraftübertragung von oben nach unten kann auch über einen Flachriemen 18 zu einem Generator 16 erfolgen. Durch die Turmhauptachse des drehbaren Turmes - von der Drehbarkeit am Boden über den Antrieb im drehbaren Turmfuß und dem triebstrangverzweigten, stahldrahtseilunterstützten, schlaufenbildenden Flachriementrieb einschließlich dem Übersetzungsverhältnis zwischen Rotorwelle 1 und der Welle des Generators 16 ist in jeder beliebigen Nabenhöhe ein zuverlässiger Dauerbetrieb gewährleistet.

Der Flachriemen 18 wird im Inneren der Vertikalsäule nach unten geführt und ist damit vor äußeren Einflüssen (Regen- oder Staubeinwirkungen etc.) und Schäden auf das Antriebssystem geschützt.

### Liste der Bezugszeichen

- **1**: Rotornabe mit Rotorwelle
- **2**: Riemenscheibe
- **3**: Rotor
- **4**: gespreizter Turmquerschnitt
- **5**: drehbarer Turm
- **6**: Drehverbindung
- **7**: Vertikalsäule
- **8**: Drucksäule
- **9**: horizontaler Spreizwinkel

- **10**: vertikaler Spreizwinkel
- **11**: Drehkreis
- **12**: Maschinenhaus/Bedienung
- **13**: Antriebs- / Generatorplattform
- **14**: Eigenhebezeug
- **15**: obere Grenze der Prandtl-Schicht
- **16**: Generator
- **17**: Riemenscheibe
- **18**: Flachriemen
- **20**: Vorspanngewicht
- **21**: Schwinge
- **NH**: Nabenhöhe

## Patentansprüche

1. Antriebssystem für Binnenwindanlagen, bestehend aus einem drehbaren Turm (5) mit in Nabenhöhe (NH) gelagertem Rotor (3) und einer am Fuß des Turmes (5) angeordneten Antriebs- und Generatorplattform (13), wobei zur Fortleitung des Rotordrehmomentes ein Flachriemen (18) vorgesehen ist, der zuverlässigen Betrieb mit gutem Wirkungsgrad und hoher Lebensdauer ermöglicht, wobei
- als Übertragungselement ein- oder mehrteilig, ein durch Schlaufen verbundener Flachriemen (18), der über eine große Riemenscheibe (2) in Nabenhöhe (NH) und über Führungswalzen auf dem Weg bis zur kleinen Riemenscheibe (17) auf der Antriebs- / Generatorplatform (13) einzeln oder triebstrangverzweigt das Rotordrehmoment überleitet und einspeist,
- der Flachriemen (18) durch eingelassene Stahldrahtseile als ein hochfester Flachriemen (18) auch in der doppelten Länge des Abstandes der oberen Riemenscheibe (2) zu der unteren Riemenscheibe (17) verfügbar ist,
- der hochfeste Flachriemen (18) über Drahtseilverknüpfungen und - verbindungen im Zusammenwirken mit den Werkstoffen der Vulkanisation sowohl an beliebiger Stelle im Flachriemen (18) wie auch an jedem Ort in der Riemenführung im drehbaren Turm (5) zur Schlaufenbildung geeignet ist,
- zusätzlich zur ständigen Vorspannung des Flachriemens (18) aus der pendelnd gelagerten Eigenmasse der Antriebs- / Generatorplattform (13) zur Feineinstellung auf die momentan herrschenden Windverhältnisse eine optimale Stellung der Vorspanngewichte (20) mittels CMS vorgesehen ist, und
- zur ständigen Kontrolle der Unversehrtheit der Flachriemen (18) eine automatische Überwachung vorhanden ist, die beim Auftreten eines Schadens die sofortige geregelte Stillsetzung des Antriebssystems ausführt.

## Claims

1. A drive system for an onshore wind power installation, composed of a rotatable tower (5) having a rotor (3) mounted at a hub height (NH) and a drive and generator platform (13) disposed at the foot of the tower (5), wherein a flat belt (18) enabling a reliable operation with good efficiency and a long service life is provided for transmitting the rotor torque, wherein
- as a transmission element in one or multiple parts, a flat belt (18) which is connected by loops, and by way of a large belt pulley (2) at the hub height (NH), and by way of guide rollers on the path to the small belt pulley (17) on the drive/generator platform (13), transmits and feeds the rotor torque singularly or while bifurcating through the drivetrain;
- the flat belt (18), by way of incorporated steel wire ropes is available as a high-tensile flat belt (18) also in double the length of the spacing of the upper belt pulley (2) from the lower belt pulley (17);
- the high-tensile flat belt (18) by way of wire rope combinations and connections, while interacting with the material of the vulcanization, is suitable for forming a loop at any arbitrary location in the flat belt (18) as well as at every location in the belt arrangement in the rotatable tower (5);
- in addition to the permanent pre-tensioning of the flat belt (18) from the floating dead weight of the drive/generator platform (13), an optimal position of the pre-tensioning weights (20) by means of CMS is provided for the fine adjustment to the currently prevailing wind conditions; and
- automatic monitoring for permanently checking the integrity of the flat belts (18) is provided, said automatic monitoring performing the immediate controlled shut-down of the drive system in the event of damage.

## Revendications

1. Un système d'entraînement pour des éoliennes intérieures, constitué d'une tour rotative (5) avec un rotor (3) monté à la hauteur du moyeu (NH) et d'une plate-forme d'entraînement et de générateur (13) disposée au pied de la tour (5), dans lequel une courroie plate (18) est prévue pour la transmission du couple du rotor, qui permet un fonctionnement fiable avec un bon rendement et une longue durée de vie, dans lequel
- en tant qu'élément de transmission en une ou plusieurs parties, une courroie plate (18) reliée par des boucles, qui transfère et alimente le couple du rotor via une grande poulie (2) à la hauteur de moyeu (NH) et via des galets de guidage sur le chemin jusqu'à la petite poulie (17) sur la plate-forme d'entraînement / générateur (13) individuellement ou dans une branche de transmission,
- la courroie plate (18) au moyen de câbles en acier intégrés en tant que courroie plate (18) à haute résistance est également disponible dans deux fois la longueur de la distance entre la poulie supérieure (2) et la poulie inférieure (17),
- la courroie plate (18) à haute résistance est adaptée à la formation de boucles au moyen de liens et connexions de câbles métalliques en interaction avec les matériaux de vulcanisation à la fois en tout point de la courroie plate (18) et en tout endroit du guide de courroie dans la tour rotative (5),
- en plus de la précontrainte constante de la courroie plate (18) à partir de la masse morte oscillante de la plate-forme d'entraînement/générateur (13), une accentuation optimale des poids de précontrainte (20) est assurée au moyen de CMS pour un ajustement précis aux conditions de vent actuellement dominantes, et
- pour le contrôle continu de l'intégrité des courroies plates (18), une surveillance automatique est prévue, qui effectue l'arrêt immédiat et régulé du système d'entraînement en cas de dommage.
